# EUROPÄISCHE PATENTSCHRIFT

(11) **EP 0 897 079 B1**
(45) Veröffentlichungstag und Bekanntmachung des Hinweises auf die Patenterteilung: **06.06.2001**
(21) Anmeldenummer: 98111664.3
(22) Anmeldetag: 25.06.1998
(51) Int. Cl.: F16L 3/10, F16L 55/033

(54) **Rohrschelle**
Pipe clamp
Collier de serrage pour tuyaux

(30) Priorität: 11.08.1997 DE 29714311 U
(43) Veröffentlichungstag der Anmeldung: 17.02.1999
(73) Patentinhaber: fischerwerke Artur Fischer GmbH & Co. KG, 72178 Waldachtal (DE)
(72) Erfinder: Mayer, Horst, 22393 Hamburg (DE)

(56) Entgegenhaltungen:
- EP-A- 0 809 060
- DE-A- 2 148 116
- DE-A- 4 015 404

## Beschreibung

Die Erfindung betrifft eine Rohrschelle mit den Merkmalen des Oberbegriffs des Anspruchs 1.

Derartige Rohrschellen dienen zum Befestigen von beispielsweise Wasserrohren an einer Wand oder Decke. Bekannte Rohrschellen weisen zwei Schellenbügel auf, die über ein Gelenk schwenkbar miteinander verbunden sind, so daß die Rohrschelle zum Einlegen eines Rohrs geöffnet werden kann. Mit einer Spanneinrichtung, die bei bekannten Rohrschellen eine Spannschraube aufweist, welche zwei Flansche der beiden Schellenbügel durchgreift, ist die Rohrschelle verschließbar und sind die beiden Schellenbügel gegeneinander spannbar, um das eingelegte Rohr in der Rohrschelle festzuspannen. Die bekannten Rohrschellen haben den Nachteil, daß die beiden Schellenbügel nach dem Einlegen des Rohres zueinander gedrückt werden müssen und die Rohrschelle mit dem Schließelement geschlossen werden muß. Es ist also notwendig, das Rohr mit einer Hand in die Rohrschelle einzulegen und in der Rohrschelle zu halten, bis die Rohrschelle geschlossen worden ist, wozu die zweite Hand erforderlich ist.

Aus der DE-A 40 15 404 ist eine derartige Rohrschelle bekannt, deren Gelenk durch Ausstanzungen an zwei Enden der Schellenbügel gebildet ist, an denen die beiden Schellenbügels schwenkbar ineinander eingehängt sind. Die Enden der Schellenbügel stehen auf der Innenseite der Rohrschelle über und stehen bei geöffneter Rohrschelle von der Innenseite des jeweils anderen Schellenbügels ab. Beim Einlegen eines Rohrs in die bekannte Rohrschelle ist es möglich, das Rohr gegen das übersehende Ende des einen Schellenbügels zu drücken und damit das überstehende Ende des einen Schellenbügels gegen die Innenseite des anderen Schellenbügels zu bewegen. Dadurch wird der eine Schellenbügel in Richtung des anderen Schellenbügels, also in Schließrichtung verschwenkt. Des weiteren weist die bekannte Rohrschelle eine selbstschließende Spanneinrichtung auf, bei der ein Kopf einer Spannschraube, die in ein Ende des einen Schellenbügels eingeschraubt ist, beim Schließen der Rohrschelle selbsttätig in Eingriff mit einem Ende des anderen Schellenbügels gelangt, so daß die Rohrschelle provisorisch geschlossen ist. Abschließend braucht die Spannschraube nur noch angezogen werden.

Die bekannte Rohrschelle hat allerdings den Nachteil, daß bei einer Wand- oder Deckenmontage ihres einen Schellenbügels der andere Schellenbügel durch Gewichtskraft soweit vom einen Schellenbügel weg schwenken kann, daß ein Rohr beim Einlegen in die Rohrschelle das an deren Gelenk überstehende Ende des anderen Schellenbügels auf dessen Rückseite, also in Öffnungsrichtung beaufschlagt. Es ist dadurch nicht möglich, die beiden Schellenbügel durch Einlegen des Rohrs in Schließrichtung, also aufeinander zu zu verschwenken.

Hinsichtlich des Gelenks, das die beiden Schellenbügel schwenkbar miteinander verbindet, sind aus der DE-A 21 48 116 und der EP-A 0 809 060 (veröffentlicht am 26.11.97) vorstehend beschriebener Rohrschelle entsprechende Rohrschellen bekannt. Diese Rohrschellen weisen jedoch keine selbstschließende Spanneinrichtung auf.

Der Erfindung liegt die Aufgabe zugrunde, eine Rohrschelle der vorstehend erläuterten Art so weiter zu bilden, daß ein Verschwenken ihrer Schellenbügel durch Einlegen eines Rohrs in Schließrichtung zuverlässig möglich ist.

Diese Aufgabe wird erfindungsgemäß durch die Merkmale des Anspruchs 1 gelöst. Einer der beiden Schellenbügel der erfindungsgemäßen Rohrschelle weist ein Schließelement beispielsweise in Form eines den einen Schellenbügel über das Gelenk hinaus in den Bereich der Innenseite des anderen Schellenbügels verlängernden Fortsatzes auf. Der eine Schellenbügel bildet mit dem Schließelement eine Art Wippe, die um das Gelenk der Rohrschelle schwenkbar ist. Beim Öffnen der Rohrschelle, d.h. beim Auseinanderschwenken der Schellenbügel schwenkt das Schließelement in etwa in radialer Richtung vom anderen Schellenbügel weg in das Innere der Rohrschelle. Beim Einlegen des Rohrs in die Rohrschelle gelangt das Rohr in Anlage an das Schließelement und drückt dieses in etwa in radialer Richtung nach außen in Richtung der Innenseite des anderen Schellenbügels. Das Schließelement schwenkt dabei um das Gelenk, das die beiden Schellenbügel schwenkbar miteinander verbindet. Zusammen mit dem Schließelement schwenkt der eine Schellenbügel in einer Schließbewegung zum anderen Schellenbügel, so daß die beiden Schellenbügel das eingelegte Rohr umgreifen. Das Zusammenschwenken der beiden Schellenbügel zum Schließen der Rohrschelle erfolgt durch das Einlegen des Rohrs in die geöffnete Rohrschelle. Es braucht also lediglich das Rohr gehalten zu werden, das Zusammenschwenken der beiden Schellenbügel von Hand entfällt, was ein Anbringen des Rohrs in der Rohrschelle vereinfacht.

Dabei ist der Schwenkwinkel, um den die beiden Schellenbügel zum Öffnen der Rohrschelle auseinander schwenkbar sind, begrenzt. Der Schwenkwinkel wird so groß gewählt, daß das Rohr problemlos in die Rohrschelle einlegbar ist. Durch die Begrenzung des Schwenkwinkels wird sichergestellt, daß das Rohr beim Einlegen in die Rohrschelle das Schließelement in Schließrichtung der Rohrschelle beaufschlagt, d.h. daß das Rohr den einen Schellenbügel über das Schließelement in Richtung des anderen Schellenbügels verschwenkt.

Die Spanneinrichtung der erfindungsgemäßen Rohrschelle ist selbstschließend ausgebildet. Dies wird beispielsweise dadurch bewerkstelligt, daß eine Spannschraube der Spanneinrichtung schwenkbar mit einem der beiden Schellenbügel verbunden ist und beim Zusammenschwenken der beiden Schwenkbügel federbetätigt in Eingriff mit dem anderen Schellenbügel verschwenkt wird. Eine derartige, selbstschließende Spanneinrichtung ist beschrieben in der DE 197 16 632.6.

Das Schließelement ist in radialer Richtung federnd ausgebildet. Dies hat den Vorteil, daß die beiden Schellenbügel beim Einlegen des Rohrs mit Kraft gegeneinander gedrückt werden. Weiterer Vorteil ist, daß das Zusammenschwenken der Schellenbügel problemlos durch Einlegen von Rohren unterschiedlicher Durchmesser erfolgen kann.

Das Schließelement ist als Federzunge ausgebildet, die insbesondere als mit dem einen Schellenbügel einstückiges Blechstanz- und Biegeteil in einem Arbeitsgang mit dem Herstellen des einen Schellenbügels durch Stanzen und Biegen aus Blech hergestellt ist. Ebenso ist es möglich, die Federzunge beispielsweise durch Schweißen oder Nieten mit dem einen Schellenbügel zu verbinden. Eine weitere Möglichkeit ist es, das Schließelement beispielsweise aus Kunststoff herzustellen und beispielsweise mittels einer an sich bekannten Klipsverbindung mit dem einen Schellenbügel zu verbinden. Auch ist es möglich, den einen Schellenbügel aus Kunststoff in einem Stück mit dem Schließelement herzustellen.

Ferner besteht bei zusammengeschwenkten Schellenbügeln und entspanntem Schließelement, d.h. wenn kein Rohr in die Rohrschelle eingelegt ist, ein Zwischenraum zwischen dem Schließelement und dem anderen Schellenbügel. Dies stellt sicher, daß die beiden Schellenbügel auch von einem Rohr kleinen Durchmessers vollständig zusammengeschwenkt werden.

Zur Anbringung der erfindungsgemäßen Rohrschelle an einer Wand, Decke oder dgl. ist der andere Schellenbügel bei Ausgestaltungen der Erfindung mit einer angeschweißten Mutter oder einem angeschweißten Gewindebolzen versehen.

Die Erfindung wird nachfolgend anhand eines in der Zeichnung dargestellten Ausführungsbeispiels näher erläutert. Es zeigen
- Figur 1: eine erfindungsgemäße, geöffnete Rohrschelle in Seitenansicht;
- Figur 2: einen Querschnitt einer gummielastischen Einlage der in Figur 1 dargestellten Rohrschelle;
- Figur 3: eine Einzelheitdarstellung gemäß Pfeil III in Figur 1;
- Figur 4: die Rohrschelle aus Figur 1 in geschlossenem Zustand mit eingelegtem Rohr.

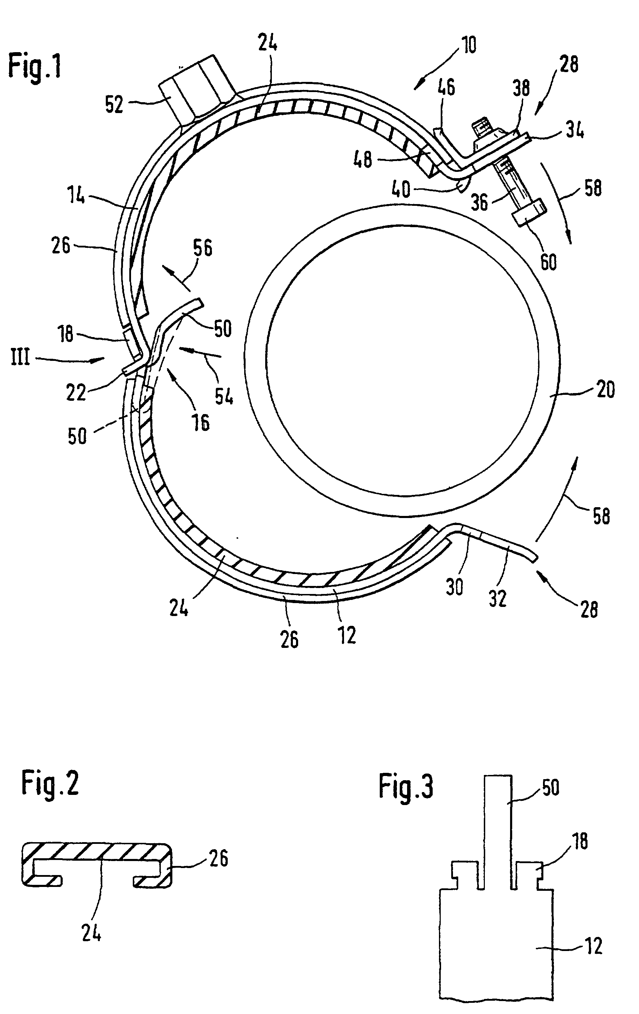

Die in Figur 1 dargestellte erfindungsgemäße Rohrschelle 10 weist zwei Schellenbügel 12, 14 auf, die beide jeweils etwas weniger als einen Halbkreisbogen bilden. Die beiden Schellenbügel 12, 14 sind Blechstanz- und Biegeteile. Sie sind an einer Stelle ihres Umfangs mit einem Gelenk 16 schwenkbar miteinander verbunden. Das Gelenk 16 wird gebildet von zwei hakenförmigen Laschen 18 (Figur 3), die einstückig mit einem Schellenbügel 12 sind und die in an sich bekannter Weise eine in der Zeichnung nicht sichtbare Austanzung im anderen Schellenbügel 14 durchgreifen. Durch Auseinanderschwenken der beiden Schellenbügel 12, 14 ist die erfindungsgemäße Rohrschelle 10 zum Einlegen eines Rohres 20 oder dgl. öffenbar, wie in Figur 1 zu sehen. Die hakenförmigen Laschen 18 des einen Schellenbügels 12 sowie eine nach außen abstehende Lasche 22 des anderen Schellenbügels 14 bilden durch Anlage an einer Außenseite des jeweils anderen Schellenbügels 14, 12 eine Schwenkwinkelbegrenzung, die den Winkel begrenzt, um den die beiden Schellenbügel 12, 14 auseinanderschwenkbar sind.

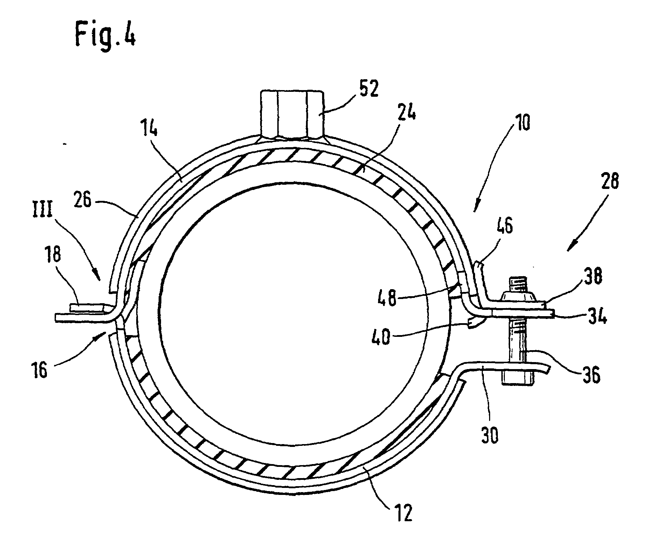

Auf ihren konkaven Innenseiten weisen beiden Schellenbügel 12, 14 eine gummielastische Einlage 24 auf. Diese in Figur 2 im Querschnitt dargestellte Einlage 24 weist zu ihrer Befestigung an den Schellenbügeln 12, 14 im Querschnitt C-förmige Seitenränder 26 auf, welche Seitenränder der Schellenbügel 12, 14 umgreifen und die Einlage 24 auf diese Weise an den Schellenbügeln 12, 14 halten. Der klaren Darstellung wegen sind die Einlagen 24 in Figuren 1 und 4 geschnitten dargestellt, es ist auf den konvexen Außenseiten der Schellenbügel 12, 14 der in Blickrichtung jeweils hintere C-förmige Seitenrand 26 der Einlagen 24 sichtbar.

Zum Schließen der Rohrschelle 10 und Festspannen des Rohres 20 in der Rohrschelle 10 weist die Rohrschelle 10 an einer dem Gelenk 16 gegenüberliegenden Stelle ihres Umfangs, also an dem Gelenk 16 abgewandten Enden der beiden Schellenbügel 12, 14 eine Spanneinrichtung 28 auf, die beim Zusammenschwenken der beiden Schellenbügel 12, 14 selbstschließend ausgebildet ist: Die Spanneinrichtung 28 weist einen Spannflansch 30 auf, der einstückig mit dem einen Schellenbügel 12 und in etwa radial nach außen stehend gebogen ist. Der Spannflansch 30 ist mit einem in radialer Richtung verlaufenden, außen offenen Schlitz 32 versehen. Am anderen Schellenbügel 14 weist die Spanneinrichtung 28 ebenfalls einen Spannflansch 34 auf, der mit dem anderen Schellenbügel 14 einstückig und in etwa in radialer Richtung nach außen abstehend gebogen ist. Die beiden Spannflansche 30, 34 sind bei geschlossener Rohrschelle 10 in etwa parallel zueinander (Figur 4).

Durch ein in der Zeichnung nicht sichtbares, radial verlaufendes Langloch im Spannflansch 34 des anderen Schellenbügels 14 ist eine Spannschraube 36 durchgesteckt und in ein mit einem Innengewinde versehenes Schwenkblech 38 eingeschraubt. Das Schwenkblech 38 liegt auf einer dem Spannflansch 30 des einen Schellenbügels 12 abgewandten Seite des Spannflansches 34 des anderen Schellenbügels 14 auf. Das Schwenkblech 38 weist eine gekröpfte Zunge 40 auf, die durch eine in der Zeichnung nicht sichtbare Ausstanzung am inneren Ende des Spannflansches 34 durchgesteckt ist. Mit der gekröpften Zunge 40 ist das Schwenkblech 38 schwenkbar mit dem anderen Schellenbügel 14 verbunden, es läßt sich durch Schwenken vom Spannflansch 34 abheben. Mit dem Schwenkblech 38 verschwenkt auch die Spannschraube 36 in radialer Richtung nach außen, wobei das Langloch im Spannflansch 34 Freiraum für die Schwenkbewegung der Spannschraube 36 gewährt.

In etwa rechtwinklig abgebogene Fortsätze 46 des Schwenkblechs 38 liegen außen auf den C-förmigen Seitenrändern 26 der gummielastischen Einlage 24 an. Die gummielastische Einlage 24 mit ihren C-förmigen Seitenrändern 26 bildet ein Federelement, welches über die Fortsätze 46 das Schwenkblech 38 in Anlage an den Spannflansch 34 drückt. Ausnehmungen 48 in den Seitenrändern des anderen Schellenbügels 14 bieten Freiraum für die Fortsätze 46 des Schwenkblechs 38 bei dessen Schwenkbewegung.

Der eine Schellenbügel 12 weist ein Schließelement in Form einer mit ihm einstückigen Federzunge 50 auf. Das die Federzunge aufweisende Ende des einen Schellenbügels 12 mit den hakenförmigen Fortsätzen 18, welche Teil des Gelenks 16 sind, ist in Figur 3 in einer ebenen Abwinklung dargestellt. Die Federzunge 50 verlängert den einen Schellenbügel 12 über das Gelenk 16 hinaus, sie ist zur Innenseite der Rohrschelle 10 hin gekröpft und in Bezug auf die geschlossene Rohrschelle 10 etwas nach innen gewölbt (Figur 4). Die Federzunge 50 befindet sich auf der Innenseite des anderen Schellenbügels 14, wobei ein Zwischenraum zwischen der Federzunge 50 und dem anderen Schellenbügel 14 besteht, wenn bei geschlossener Rohrschelle 10 kein Rohr 20 in die Rohrschelle 10 eingelegt ist.

Zur Befestigung an einer Wand oder Decke ist eine Mutter 52 als Befestigungseinrichtung für die Rohrschelle 10 am anderen Schellenbügel 14 angeschweißt.

Die Funktion der erfingungsgemäßen Rohrschelle 10 ist folgende: Das Rohr 20 wird in Pfeilrichtung 54 zwischen die beiden auseinandergeschwenkten Schellenbügel 12, 14 eingelegt. Das Rohr 20 stößt beim Einlegen gegen das Schließelement 50 und drückt dieses in Richtung des anderen Schellenbügels 14. Das Schließelement 50 verschwenkt dadurch um das Gelenk 16 nach außen in Richtung der Innenseite des anderen Schellenbügels 14 (Pfeil 56) und verschwenkt dadurch den einen Schellenbügel 12 in Richtung des anderen Schellenbügels 14, wie mit den Pfeilen 58 angedeutet.

Dadurch nähern sich die beiden Spannflansche 30, 34 einander. Sobald ein Kopf 60 der Spannschraube 36 gegen den Spannflansch 30 des einen Schellenbügels 12 gelangt, wird die in das Schwenkblech 38 eingeschraubte Spannschraube 36 gegen die Federkraft der C-förmigen Seitenränder 26 der gummielastischen Einlage 24 radial nach außen verschwenkt, bis der Kopf 60 der Spannschraube 36 den Spannflansch 30 überwunden hat. Dann schwenkt die Spannschraube 36 aufgrund der Federkraft der Seitenränder 26 in den außen offenen Schlitz 32 im Spannflansch 30 des einen Schellenbügels 12 hinein, wobei der Kopf 60 der Spannschraube 36 sich auf einer dem Spannflansch 34 des anderen Schellenbügels 14 abgewandten Seite des Spannflanschs 30 des einen Schellenbügels 12 befindet, d.h. die Spannschraube 36 steht in Eingriff mit dem Spannflansch 30 des einen Schellenbügels 12. Die Rohrschelle ist auf diese Weise provisorisch geschlossen. Durch Festziehen der Spannschraube 36 kann das Rohr 20 in der Rohrschelle 10 festgespannt werden. Figur 4 zeigt die geschlossene Rohrschelle 10 mit dem in ihr einliegenden Rohr 20. Das als Federzunge ausgebildete Schließelement 50 liegt außen am Rohr 20 an, es befindet sich zwischen dem Rohr 20 und dem anderen Schellenbügel 14. Die beiden Schellenbügel 12, 14 der erfindungsgemäßen Rohrschelle 10 werden also ausschließlich durch Einlegen des Rohrs 20 zusammengeschwenkt und die Rohrschelle 10 provisorisch geschlossen, ohne daß die Rohrschelle 10 selbst angefasst werden muß.

Die hakenförmigen Zungen 18 des einen Schellenbügels 12 sowie der Flansch 22 des anderen Schellenbügels 14 begrenzen den Schwenkwinkel, um den die beiden Schellenbügel 12, 14 auseinanderschwenkbar sind. Auf diese Weise ist sichergestellt, daß das Rohr 20 beim Einlegen in die Rohrschelle 10 das Schließelement 50 in Richtung des anderen Schellenbügels 14 drückt, so daß die beiden Schellenbügel 12, 14 aufeinander zu schwenken.

Die das Schließelement bildende Federzunge 50 kann beispielsweise auch aus dem einen Schellenbügel 12 ausgestanzt und durch Umbiegung um 180° auf die Innenseite der Rohrschelle 10 in die vorgesehene Lage geformt sein, wie in Figur 1 mit Strichlinien angedeutet.

## Patentansprüche

1. Rohrschelle mit zwei Schellenbügeln (12, 14), die zum Öffnen der Rohrschelle (10) über ein Gelenk (16) schwenkbar miteinander verbunden sind und mit einer selbstschließenden Spanneinrichtung (28) zum Schließen der Rohrschelle (10) und Festspannen eines in die Rohrschelle (10) eingelegten Rohres, wobei einer der beiden Schellenbügel (12) ein Schließelement (50) aufweist, das in radialer Richtung federnd ausgebildet ist und das von dem einen Schellenbügel (12) über das Gelenk (16) hinweg in das Innere der Rohrschelle (10) ragt, und mit einer Schwenkwinkelbegrenzung (18, 22) für die beiden Schellenbügel (12, 14), die einen Schwenkwinkel der beiden Schellenbügel (12, 14) in Öffnungsrichtung der Rohrschelle (10) begrenzt **dadurch gekennzeichnet,** dass zwischen dem als Federzunge (50) ausgebildeten Schließelement (50) und dem anderen Schellenbügel (14) ein Zwischenraum besteht und dass die Federzunge (50) soweit den einen Schellenbügel (12) über das Gelenk (16) hinaus verlängert, daß ein Rohr (20) beim Einlegen in die Rohrschelle (10) gegen die Innenseite der Federzunge (50) stößt und diese gegen den anderen Schellenbügel (14) in Schließrichtung drückt.

2. Rohrschelle nach Anspruch 1, **dadurch gekennzeichnet,** daß der andere Schellenbügel (14) eine Befestigungseinrichtung (52) zum Anbringen an einer Wand, Decke oder dgl. aufweist.

## Claims

1. A pipe clip having two clip brackets (12,14) that for opening the pipe clip (10) are pivotally connected to one another by means of a hinge (16) and having a self-closing clamping device (28) for closing the pipe clip (10) and firmly clamping a pipe laid in the pipe clip (10), one of the two clip brackets (12) having a closure element (50) which is constructed to have resilience in a radial direction and projects from the one clip bracket (12) beyond the hinge (16) into the interior of the pipe clip (10), and having a pivot angle-limiting means (18, 22) for the two clip brackets (12, 14), which limits a pivot angle of the two clip brackets (12,14) in the opening direction of the pipe clip (10), **characterised in that** between the closure element (50) in the form of a resilient tongue and the other clip bracket (14) there is a space, and the resilient tongue (50) extends the one clip bracket (12) beyond the hinge (16) to such an extent that a pipe (20), as it is inserted in the pipe clip (10), comes up against the inner side of the resilient tongue (50) and presses this toward the other clip bracket (14) in the closing direction.

2. A pipe clip according to claim 1, characterised in that the said other clip bracket (14) has a fastening device (52) for mounting on a wall, ceiling or the like.

## Revendications

1. Collier de serrage pour tuyaux, avec deux branches de collier (12, 14) qui, pour ouvrir le collier de serrage pour tuyaux (10) sont reliées l'une à l'autre de façon pivotante par l'intermédiaire d'un élément articulé (16), et avec un système de serrage autoserrant (28) pour fermer le collier de serrage pour tuyaux (10) et serrer un tuyau mis en place dans le collier de serrage pour tuyaux (10), l'une des deux branches du collier (12) comportant un élément de fermeture (50) qui est conçu de façon à faire ressort dans le sens radial et qui s'engage de la branche du collier (12) à l'intérieur du collier de serrage pour tuyaux (10) par dessus l'élément articulé (16), et avec un système de limite d'angle de pivotement (18, 22) pour les deux branches du collier (12,14) qui limite un angle de pivotement des deux branches du collier (12, 14) dans le sens de l'ouverture du collier de serrage pour tuyaux (10), caractérisé en ce qu'un espace intermédiaire est prévu entre l'élément de fermeture conçu sous forme d'une lame flexible (50) et l'autre branche du collier (14) et en ce que la lame flexible (50) prolonge la branche du collier (12) au-delà de l'élément articulé (16) au point qu'un tuyau (20), lorsqu'il est mis en place dans le collier de serrage pour tuyaux (10), bute contre la face intérieure de la lame flexible (50) et appuie celle-ci contre l'autre branche du collier (14) dans le sens de la fermeture.

2. Collier de serrage pour tuyaux selon la revendication 1, caractérisé en ce que l'autre branche du collier (14) comporte un système de fixation (52) pour le montage sur un mur, un plafond, ou équivalent.
